Europäisches Patentamt

European Patent Office

Office européen des brevets

(11) Publication number: 0 202 636
A2

# EUROPEAN PATENT APPLICATION

(21) Application number: 86106753.6

(22) Date of filing: 16.05.86

(51) Int. Cl.⁴: C 08 L 27/06
C 08 K 5/16, C 08 J 7/18
B 29 C 71/04

(30) Priority: 21.05.85 JP 109002/85

(43) Date of publication of application:
26.11.86 Bulletin 86/48

(84) Designated Contracting States:
DE FR GB

(71) Applicant: Shin-Etsu Chemical Co., Ltd.
6-1, Ohtemachi 2-chome
Chiyoda-ku Tokyo 100(JP)

(72) Inventor: Ueno, Susumu Shin-Etsu Kagaku Kogyo
Doai Shataku 3-308 9809-7, Yatabe
Hazaki-cho Kashima-gun Ibaraki-ken(JP)

(72) Inventor: Kuroda, Koichi Shin-Etsu Kagaku Kogyo
Doai Shataku 1-103 9809-7, Yatabe
Hazaki-cho Kashima-gun Ibaraki-ken(JP)

(72) Inventor: Hoshida, Shigehiro
Renshi Ryo, 5-7-35, Chite-chuo
Kamisu-cho Kashima-gun Ibaraki-ken(JP)

(74) Representative: Jaeger, Klaus, Dr. et al,
JAEGER & PARTNER Patentanwälte Bergstrasse 48 1/2
D-8035 München-Gauting(DE)

(54) A method for the preparation of shaped articles of a vinyl cloride-based resin having improved surface properties.

(57) A vinyl chloride-based resin is compounded with a reaction product of a hydroxy-containing (meth)acrylic compound, e.g. 1,3-dimethacryloxy-2-hydroxy propane, and an isocyanate compound, e.g. diphenylmethane diisocyanate, and the resin composition is shaped into an article which is then subjected to a low temperature plasma treatment. The thus obtained shaped article is imparted with remarkably improved surface properties such as decrease in the phenomenon of plasticizer bleeding and the effect is very durable even after prolonged outdoor exposure of the article.

# A METHOD FOR THE PREPARATION OF SHAPED ARTICLES OF A VINYL CHLORIDE-BASED RESIN HAVING IMPROVED SURFACE PROPERTIES

## BACKGROUND OF THE INVENTION

The present invention relates to a method for the preparation of a shaped article of a vinyl chloride-based resin composition having improved surface properties. More particularly, the invention relates to a method for the preparation of a shaped article of a vinyl chloride-based resin composition having improved surface properties in respect of the insusceptibility to surface stain, weatherability, heat resistance, resistance against chemicals and oils, insusceptibility to blocking, decreased bleeding of plasticizers and others.

As is well known, vinyl chloride-based resins belong to one of the most important classes of general-purpose synthetic plastics by virtue of the versatility in respect of the rigidity of the shaped articles thereof ranging from rigid articles without formulation of a plasticizer to flexible articles prepared by compounding the resin with a substantial amount of a plasticizer. Besides the plasticizers used for controlling the flexibility or rigidity of the shaped articles, vinyl chloride-based resins are compounded with various kinds of other additives or compounding agents such as stabilizers, lubricants, antioxidants, chelating agents, anti-fogging agents, ultraviolet absorbers, fillers and so on depending on the intended application of the resin composition including films, sheets, artificial leathers, tubes, hoses, packings, covering materials and the like used in medical implements, wrapping materials of foods, insulation of electric wires, building materials and the like.

One of the serious problems almost always encountered in these shaped articles of a vinyl chloride-based resin compounded with the above mentioned additives is that the plasticizer and other additive ingredients contained therein migrate toward the surface of the article eventually to cause an undesirable phenomenon of bleeding or blooming in the lapse of time so that the shaped articles suffer decreased beautifulness of the appearance, adverse influences on the chemical and physical properties of the shaped articles, durability and other disadvantages. In particular, such a phenomenon of bleeding or blooming of the additive ingredients on the surface is quite undesirable in the applications in the fields of medicine or foodstuff when the additive ingredient is toxic or physiologically unacceptable.

Various proposals and attempts of course have been made in the prior art in order to overcome the above mentioned problems including irradiation of the surface of the article with ionizing radiations or ultraviolet light and treatment of the surface wih a chemical agent. These prior art methods are of course effective to increase the heat resistance and solvent resistance of and to impart hydrophilicity, insusceptibility to accumulation of static electric charge and printability to the surface. These prior art methods, however, are rather ineffective when bleeding of the plasticizer and the like on the surface should be prevented or reduced with, on the other hand, some adverse effects on the advantageous properties inherent in the vinyl chloride-based resin.

Namely, the ionizing radiations usually have high energy so that the effect thereof is sometimes not limited to the very surface of the articles but the radiation penetrates more or less to the depth of the article to cause undesired alterations in the properties of the article due to, for example, formation of intermolecular crosslinks. When a shaped article of a vinyl chloride-based resin composition is irradiated with ultraviolet light, the surface of the article is sometimes not free from the problem of disadvantageous coloration. The chemical means in the prior art are also not free from the problems in respect of the corrosiveness of the treatment agent, poor adhesion of the agent to affect the durability of the effect by the treatment and so on.

A considerably effective method has recently been reported to improve the surface properties of a shaped article of a vinyl chloride-based resin composition that the surface
of the shaped article is subjected to a treatment of exposure to an atmosphere of low temperature plasma so as to prevent bleeding of the plasticizer contained therein on the
surface. The method of low temperature plasma treatment is
indeed effective at least for a length of time immediately
following the plasma treatment but the durability of the effect is far from satisfactory since the effect gradually
disappears in the lapse of time when the treated article is
used prolongedly, especially, in an outdoor condition so
that it has been eagerly desired to develop a novel and effective method in the above mentioned object without the
problems and disadvantages in the prior art methods.

## SUMMARY OF THE INVENTION

Thus, the method of the present invention established
as a result of the extensive investigations undertaken in
the above mentioned object comprises:

(a) compounding (A) 100 parts by weight of a vinyl chloride-
based resin with (B) from 0.3 to 30 parts by weight of a reaction product of an acrylic or methacrylic compound having
at least one hydroxy group in a molecule and an isocyanate
compound to give a vinyl chloride-based resin composition;

(b) shaping the vinyl chloride-based resin composition into
an article; and

(c) subjecting the shaped article to a treatment of exposure
to an atmosphere of low temperature plasma of an inorganic gas under a pressure in the range from 0.001 to 10 Torr.

DETAILED DESCRIPTION OF THE PREFERRED EMBODIMENTS

As is understood from the above given summarizing description, the most unique feature of the inventive method is in the compounding of the vinyl chloride-based resin composition before shaping with a specific additive which is a specific reaction product of an acrylic or methacrylic compound and an isocyanate compound followed by shaping an article which is then subjected to a low temperature plasma treatment. The shaped article prepared in accordance with the above described method is imparted with markedly improved surface properties including the greatly decreased bleeding of the plasticizer and insusceptibility of the surface to contamination or stain. Moreover, the advantageous effect obtained in the above described inventive method is quite durable so that the shaped article prepared according to the inventive method can be used prolongedly even under an adverse condition of outdoor exposure without losing the effect obtained by the low temperature plasma treatment.

The principal component in the resin composition of which the shaped article is prepared according to the inventive method is of course a vinyl chloride-based resin which is not particularly limited to homopolymeric polyvinyl chloride resins but can be a copolymeric resin obtained by the copolymerization of a monomer mixture composed of vinyl chloride in an amount of, for example, 50 % by weight or more combined with one or more of comonomers copolymerizable with vinyl-chloride. The comonomers to be copolymerized with vi-nyl chloride include vinyl esters, e.g. vinyl acetate, vinyl ethers, acrylic and methacrylic acids and esters thereof, maleic and fumaric acids and esters thereof, maleic anhydride, aromatic vinyl compound, e.g. styrene, vinylidene halides, e.g. vinylidene chloride, unsaturated nitriles, e.g. acrylonitrile and methacrylonitrile, olefins, e.g. ethylene and propylene, and the like.

The specific additive essentially compounded with the above mentioned vinyl chloride-based resin is a reaction product of an acrylic or methacrylic compound having at least one, or preferably one, hydroxy group in a molecule and an isocyanate compound. The hydroxy-containing (meth)acrylic compound is exemplified by 1-acryloxy-2-hydroxy-3-methacryloxy propane, 1,3-dimethacryloxy-2-hydroxy propane, 2-hydroxy-3-chloropropyl methacrylate and the like. The isocyanate compound to be reacted with these (meth)acrylic compounds is exemplified by 4,4'-diphenylmethane diisocyanate, hexamethylene diisocyanate, 1,3-xylylene diisocyanate, tridene diisocyanates, dianisidine diisocyanates, tolylene diisocyanates, trans-vinylene diisocyanate, polymethylene polyphenyl isocyanates, triphenylmethane triisocyanates, phenyl isocyanate, propyl isocyanate and the like, of which the diisocyanates are preferred.

In carrying out the reaction of the hydroxy-containing
(meth)acrylic compound and the isocyanate compound, any of
the (meth)acrylic compounds and any of the isocyanate compounds named above can be combined without particular limitations although combinations of a (meth)acrylic compound
having only one hydroxy group in a molecule and a diisocyanate compound are preferable. Particularly preferred combinations are those of diphenylmethane diisocyanate with 1-ac-
ryloxy-2-hydroxy-3-methacryloxy propane and 1,3-dimethacryl-
oxy-2-hydroxy propane. The reaction product should preferably contain 3 to 5 (meth)acryloyl groups in a molecule.

The amount of the above described specific reaction
product to be compounded with the vinyl chloride-based resin
is in the range from 0.3 to 30 parts by weight or, preferably, from 1 to 10 parts by weight per 100 parts by weight
of the resin. When the amount of the reaction product is too
small, the shaped article of the resin composition cannot be
imparted with a sufficiently durable effect by the subsequent low temperature plasma treatment of the shaped article. When the amount thereof is too large, on the other
hand, the shaped article of the resin composition may suffer
a decrease in the flexibility.

The vinyl chloride-based resin composition composed of
the above described vinyl chloride-based resin and the specific additive in the specified proportion can of course be further admixed according to need with various kinds of
known additives and compounding agents conventionally used
in vinyl chloride-based resin compositions for shaping articles. Firstly, the plasticizers to impart flexibility to the
shaped articles are exemplified by phthalate esters, e.g.
dioctyl phthalate, dibutyl phthalate and butyl benzyl
phthalate, esters of aliphatic dibasic acids, e.g. dioctyl
adipate and dibutyl sebacate, esters of pentaerithritol, esters of glycols, e.g. diethyleneglycol dibenzoate, esters of
monobasic carboxylic acids, e.g. methyl acetylricinolate,
phosphate esters, e.g. tricresyl phosphate and triphenyl
phosphate, epoxidized oils, e.g. epoxidized soybean oil and
epoxidized linseed oil, citric acid esters, e.g. acetyl tributyl citrate and acetyl trioctyl citrate, polyester-type
compounds, e.g. trialkyl trimellitates, tetra-n-octyl pyro-
mellitate and polypropylene adipate, and so on.

Furthermore, the optional additives include stabilizers
used to impart heat resistance and stability to the shaped
articles exemplified by metal salts of carboxylic acids,
e.g. calcium stearate, zinc stearate, lead stearate, barium
stearate and cadmium stearate, lead compounds, e.g. tribasic
lead sulfate and dibasic lead phosphite, organic tin compounds, e.g. dibutyltin dilaurate, di-n-octyltin maleate and
di-n-octyltin mercaptide, and the like, lubricants to facilitate the shaping works of the resin composition into articles exemplified by fatty acid amides, e.g. ethylene bisstearoamide, higher fatty acids and esters thereof, polyethylene waxes and the like, fillers, antioxidants, ultraviolet absorbers, antistatic agents, anti-fogging agents,
pigments, crosslinking aids and so on.

It is further optional that the resin composition is
admixed with a rubbery polymer to improve the physical properties of the shaped articles. Suitable rubbery polymers
having compatibility with the vinyl chloride-based resin include copolymers of ethylene and vinyl acetate, copolymers
of acrylonitrile and butadiene, copolymers of styrene and
acrylonitrile, copolymers of methyl methacrylate, styrene
and butadiene, urethane elastomers, copolymers of acrylonitrile, styrene and butadiene, polyamide resins, polymers of
caprolactam, epoxy-modified polybutadiene resins and the
like. The amount of these rubbery polymers in the resin composition should not be excessively large or should not exceed 50 parts by weight per 100 parts by weight of the vinyl
chloride-based resin in order to retain the excellent properties inherent in the vinyl chloride-based resins.

The fillers compounded in the resin composition are exemplified by calcium carbonate and titanium dioxide although
many other kinds of inorganic and organic fillers known in
the art can be used also in this case. The amount of the
filler compounded in the resin composition should not be too
large or should not exceed 50 parts by weight per 100 parts by weight of the vinyl chloride-based resin since a too large amount of a filler has a detrimental effect on the desired improvement of the surface properties of the shaped articles. When a filler is added to the resin composition, the advantageous effect of the invention may further be enhanced by subjecting the filler to a surface treatment with the additive as the component (B) in advance of compounding the same with the vinyl chloride-based resin as the component (A).

The step (a) of the inventive method in which the vinyl chloride-based resin composition is prepared according to the above described manner is followed by the step (b) for shaping the resin composition into a shaped article. The method for shaping the resin composition is not particularly limitative and any of the conventional methods known in the art is applicable depending on the nature of the resin composition and the type of the desired shaped articles including extrusion molding, injection molding, calendering, inflation, compression molding and so on without particular limitations.

The shaped article of the resin composition obtained in the step (b) of the inventive method is then subjected to a low temperature plasma treatment in the step (c) by exposing the article to an atmosphere of low temperature plasma of an inorganic gas under a reduced pressure in the range from 0.001 to 10 Torr or, preferably, from 0.01 to 1 Torr. Namely, the shaped article is placed in a vacuumizable plasma chamber in which electrodes are installed and, while the pressure inside the chamber is kept under the above mentioned reduced pressure by the balance of the continuous introduction of an inorganic gas into and continuous evacuation of the chamber, an electric power of 10 watts to 100 kilowatts at a frequency of, for example, 10 kHz to 100 MHz is impressed between the electrodes to cause glow discharge so that low temperature plasma of the inorganic gas is generated inside the chamber to which the shaped article of the resin composition is exposed. It is not essential that the frequency of the electric power is within the above mentioned high frequency range but can be direct current or in the range of low frequencies and microwaves.

Although the electrodes are installed preferably inside the plasma chamber as is mentioned above, the electrodes may be installed outside the plasma chamber. A single high-frequency work coil surrounding the plasma chamber also may serve as an electrode for the generation of low temperature plasma. These electrodes are connected to a high frequency generator either by capacitive coupling or inductive coupling. At any rate, it is essential that care should be taken not to cause any adverse thermal denaturation on the surface of the shaped article under the treatment by the excessive heat of electric discharge.

The form of the electrodes, which should be installed preferably inside the plasma chamber, is not particularly limitative including plate-like, ring-like, rod-like, cylindrical and any other forms. The grounded electrode and the power electrode may be either of the same form or of different forms from each other. It is a convenient design of the plasma chamber that the chamber walls are made of a metal to serve as the grounded electrode surrounding the power electrode installed therein. The material of the electrodes may be copper, iron, aluminum and the like. It is preferable that the surface of, at least, the power electrode is provided with an insulating coating of a heat-resistant material such as glass, porcelain enamel, ceramic and the like having a breakdown voltage of at least 10,000 V to ensure stability of the electric discharge.

Suitable inorganic gases for forming the atmosphere of low temperture plasma are exemplified by helium, argon, nitrogen, nitrous oxide, nitrogen dioxide, oxygen, air, carbon monoxide, carbon dioxide, hydrogen, chlorine, hydrogen chloride, sulfur dioxide, hydrogen sulfide and the like. These inorganic gases can be used either singly or as a mixture of two kinds or more according to need. The pressure of the plasma-supporting inorganic gas inside the plasma chamber should be in the range from 0.001 to 10 Torr as is mentioned above or, preferably, from 0.01 to 1 Torr in order to ensure stability of the plasma generation.

When a shaped article of the resin composition has been subjected to the low temperature plasma treatment to an adequate extent, the surface layer of the article is converted to a barrier layer having flexibility and an adequately controlled degree of crosslinking so as to effectively prevent bleeding of the plasticizer and other additives compounded in the resin composition. The barrier layer thus formed is not detrimental against the heat-sealability of the shaped articles as in the high-frequency welding. The barrier layer has excellent durability so that the advantageous effects of the inventive method can be fully retained even after prolonged outdoor exposure of the shaped article. The advantages obtained by the inventive method are not only the above mentioned reduced or prevented bleeding of the plasticizer and other additives on the surface but the shaped articles prepared according to the inventive method are excellent in respect of other surface properties such as hydrophilicity, insusceptibility to stain, resistance against oils and chemicals and so on.

Following are the examples and comparative examples to illustrate the inventive method in more detail. In the following description, the expression of "parts" always refers to "parts by weight". In the Examples and Comparative Examples given below, each of the resin sheets either before or after the low temperature plasma treatment was subjected to the tests of the plasticizer, i.e. dioctyl phthalate, extraction and contamination with a contaminant blend. The testing procedures were as given below. The tests were undertaken with the resin sheets either before or after accelerated aging in a Weather-o-meter for 100 hours or 500 hours.

Plasticizer extraction test

A piece of the resin sheet was placed on the bottom of a cylindrical vessel having a capacity of 100 ml in such a manner that a surface area of 26 cm$^2$ of the resin sheet was exposed and contacted with 50 ml of n-hexane as a solvent introduced into the vessel. The vessel was shaken for 2 hours in a thermostat at 37 °C and the solvent was analyzed by gas chromatography to determine the concentration of dioctyl phthalate therein extracted out of the resin sheet.

Contamination test

A contaminant blend was prepared by mixing together 380 g of Knuma earth, 170 g of carbon black, 170 g of portland cement, 170 g of finely divided silica flour, 85 g of bentonite, 85 g of kaolin, 5 g of iron oxide ($Fe_3O_4$) powder and 87 g of turbine oil and the blend was introduced into a polyethylene-made wide-mouth bottle of 5 liter capacity and thoroughly shaken. Thereafter, a 3 cm by 3 cm wide piece of the resin sheet was put into the bottle and thoroughly shaken together with the contaminant blend. The bottle was kept at 80 °C in a Geer's oven for 15 minutes and taken out of the oven to be shaken again followed by second heating for another 15 minutes. This procedure of shaking and heating was repeated 4 times so that the overall heating time at 80 °C was 60 minutes. After standing to be cooled to room temperature, the piece of resin sheet was taken out of the contaminant blend followed by brushing away the blend adhering to the piece. The degree of contamination of the resin sheet was visually examined and rated in A, B, C and D according to the following criteria.

A: absolutely free from contamination

B: slightly contaminated

C: contaminated but the initial color of the resin sheet recognizable

D: badly contaminated and the initial color of the resin sheet unrecognizable

Example 1.

1,3-Dimethacryloxy-2-hydroxy propane and diphenyl methane diisocyanate were mixed together in a mixing ratio of 1:1 by moles and agitated for 24 hours at room temperature to give a light-yellow, clear viscous liquid having a viscosity of about 20,000 centipoise at 25 °C as the reaction product.

A resin composition was prepared by compounding 100 parts of a homopolymeric polyvinyl chloride resin (TK-1300, a product by Shin-Etsu Chemical Co.), 50 parts of dioctyl phthalate, 5 parts of the reaction product of 1,3-dimethacryloxy-2-hydroxy propane and diphenylmethane diisocyanate and 2.5 parts of a stabilizer based on barium and zinc compounds and the resin composition was milled on a roller mill at 160 °C for 10 minutes followed by compression molding at a temperature of 170 °C into a sheet having a thickness of 0.5 mm. This sheet as prepared is referred to as the Sheet A hereinbelow.

The Sheet A was subjected to a low temperature plasma treatment for 5 seconds in a plasma chamber under a continuous flow of carbon monoxide gas to keep a pressure at 0.05 Torr while low temperature plasma was generated inside the chamber by the impression of a high frequency electric power of 20 kilowatts at a frequency of 110 kHz. The density of the electric power on the surface of the power electrode was 3.31 kilowatts/cm$^2$. The thus plasma-treated sheet is referred to as the Sheet B hereinbelow.

Each of the Sheets A and B was subjected to the plasticizer extraction test and contamination test either as such or after accelerated aging in a Weather-o-meter for 100 hours or 500 hours to give the results shown in Table 1.

Comparative Example 1.

The formulation of the resin composition and the procedure for the preparation of a resin sheet of the resin composition were the same as in Example 1 except that the reaction product of 1,3-dimethacryloxy-2-hydroxy propane and diphenylmethane diisocyanate was replaced with the same amount of an epoxidized soybean oil. The resin sheet thus prepared is referred to as the Sheet C hereinbelow. The Sheet C was subjected to the low temperature plasma treatment in the same manner under the same conditions as in Example 1. Thethus plasma-treated sheet is referred to as the Sheet D hereinbelow. Each of the Sheets C and D was subjected to the tests in the same manner as in Example 1 to give the results shown in Table 1.

Example 2.

The formulation of the resin composition and the procedure for the preparation of a sheet of the resin composition were the same as in Example 1 except that the resin composition further contained 5 parts of an epoxidized soybean oil in addition. The resin sheet thus prepared is referred to as the Sheet E hereinbelow.

The Sheet E was subjected to a low temperature plasma treatment for 2 seconds in a plasma chamber under a continuous flow of a 1:1 by volume mixture of carbon monoxide gas and air to keep a pressure at 0.1 Torr while low temperature plasma was generated inside the chamber by the impression of a high frequency electric power of 15 kilowatts at a frequency of 110 kHz. The density of the electric power on the surface of the power electrode was 2.49 kilowatts/cm$^2$. The thus plasma-treated resin sheet is referred to as the Sheet F hereinbelow. Each of the Sheets E and F was subjected to the tests in the same manner as in Example 1 to give the results shown in Table 1.

T a b l e    1

|  | Sheet | A | B | C | D | E | F |
|---|---|---|---|---|---|---|---|
| Plasticizer extraction, mg | As prepared | 103.8 | 0.1 | 105.2 | 0.1 | 108.7 | 0.1 |
|  | After 100 hours aging | 99.2 | 0.8 | 100.8 | 97.2 | 103.1 | 0.1 |
|  | After 500 hours aging | 88.5 | 2.3 | 91.2 | 96.1 | 97.1 | 0.8 |
| Contamination test | As prepared | D | A | D | A | D | A |
|  | After 100 hours aging | D | A | D | D | D | A |
|  | After 500 hours aging | D | B | D | D | D | A |

WHAT IS CLAIMED IS:

1. A method for the preparation of a shaped article of a vinyl chloride-based resin composition which comprises the steps of:

(a) compounding (A) 100 parts by weight of a vinyl chloride-based resin with (B) from 0.3 to 30 parts by weight of a reaction product of an acrylic or methacrylic compound having at least one hydroxy group in a molecule and an isocyanate compound to give a vinyl chloride-based resin composition;

(b) shaping the vinyl chloride-based resin composition into an article; and

(c) subjecting the shaped article to a treatment of exposure to an atmosphere of low temperature plasma of an inorganic gas under a pressure in the range from 0.001 to 10 Torr.

2. The method as claimed in claim 1 wherein the acrylic or methacrylic compound is selected from the group consisting of 1-acryloxy-2-hydroxy-3-methacryloxy propane, 1,3-dimethacryloxy-2-hydroxy propane and 2-hydroxy-3-chloropropyl methacrylate.

3. The method as claimed in claim 1 wherein the isocyanate compound is selected from the group consisting of 4,4'-diphenylmethane diisocyanate, hexamethylene diisocyanate, 1,3-xylylene diisocyanate, tridene diisocyanates, dianisi-dine diisocyanates, tolylene diisocyanates, trans-vinylene diisocyanate, polymethylene polyphenyl isocyanates, triphenylmethane triisocyanates, phenyl isocyanate and propyl isocyanate.

4.   The method as claimed in claim 1 wherein the acrylic or methacrylic compound having at least one hydroxy group in a molecule is 1,3-dimethacryloxy-2-hydroxy propane and the isocyanate compound is diphenylmethane diisocyanate.